(19) Europäisches Patentamt
European Patent Office
Office européen des brevets

(11) EP 0 923 212 A2

(12) **EUROPÄISCHE PATENTANMELDUNG**

(43) Veröffentlichungstag:
16.06.1999 Patentblatt 1999/24

(51) Int. Cl.$^6$: **H04L 25/02**

(21) Anmeldenummer: 98120613.9

(22) Anmeldetag: 02.11.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **10.12.1997 DE 19754800**

(71) Anmelder: **ABB PATENT GmbH**
**68309 Mannheim (DE)**

(72) Erfinder:
• **Koepernik, Jochen, Dipl.-Ing.**
**06369 Schortewitz (DE)**
• **Vogt, Friedrich, Dipl.-Ing.**
**58579 Schalksmühle (DE)**

(74) Vertreter: **Miller, Toivo et al**
**ABB Patent GmbH**
**Postfach 10 03 51**
**68128 Mannheim (DE)**

(54) **Buskoppeleinrichtung**

(57) Die Erfindung bezieht sich auf eine Buskoppeleinrichtung für ein Installationsbussystem mit Stromversorgungsnetz-gebundener Informationsübertragung unter Verwendung wenigstens eines HF-Trägersignals. Dabei ist ein Einkoppelkreis (16) mit einem HF-Übertrager (5) vorhanden, zu dessen Primärwicklung (5.1) zumindest ein Entkopplungskondensator (3) und eine Kompensationsinduktivität (36) in Serie geschaltet sind. Diese Serienschaltung (3,36,5.1) ist mit einem Niederspannungsnetz (1,2) verbindbar. Die Induktivität (36) ist so ausgelegt, daß ihre Impedanz bei der Frequenz eines einzigen verwendeten HF-Trägersignals, oder eines Mittelwerts der Frequenzen der HF-Trägersignale im Fall der Verwendung mehrerer HF-Trägersignale, die Impedanz des Entkopplungskondensators (3) kompensiert. Damit wird erreicht, daß die Sendespannung (17) des HF-Trägersignals weitgehend unabhängig von der Netzimpedanz (bezüglich Betrag und Phase) ist.

Fig. 6

Printed by Xerox (UK) Business Services
2.16.7/3.6

**Beschreibung**

Die Erfindung bezieht sich auf eine Buskoppeleinrichtung für ein Installationsbussystem mit Stromversorgungsnetz-gebundener Informationsübertragung unter Verwendung wenigstens eines HF-Trägersignals.

Bei der netzgebundenen Übertragungstechnik wird das 230V/50Hz-Stromversorgungsnetz, oder ein anderes, z.B. 110V/60Hz-Netz, zusätzlich zu seiner herkömmlichen Stromversorgungsfunktion als Bussystem für die Übertragung von Informationen benutzt. Eine solche Technik wird im Rahmen der Gebäudeautomatisierung als Installationsbussystem zur flexiblen logischen Zuordnung von Sensoren (Schalter, Temperaturfühler, Windmesser, Steuergeräte) zu Aktoren (Dimmer, Heizungen, Jalousien etc.) eingesetzt. Die Übertragung solcher Steuerfunktionen auf dem Stromnetz als physikalisches Medium ist dabei für viele Anwender eine besonders kostengünstige Lösung im Vergleich zu anderen Installationsbussystemen, die separate Übertragungsmedien, wie z.B. Zweidrahtleitung (twisted pair) beim Europäischen Installationsbus (EIB) oder Glasfaserkabel benutzen. Letztere erfordern eine zum Stromversorgungsnetz parallelgeführte Installation eines zweiten Kabels.

Dieser Vorteil wird erkauft durch die gemeinsame Nutzung der Stromversorgungsleitung mit den damit verbundenen Nachteilen, die durch Netzstörungen und schwankende Güte des Übertragungskanals für die Nutzinformationen entstehen können. Die Nutzinformation selbst wird dabei in einem von der 50Hz-Versorgungsfrequenz abweichenden Frequenzbereich übertragen. In Europa steht dafür auf der Verbraucherseite, also in Gebäuden, z.B. der Bereich von 95..148,5 KHz zur Verfügung. Energieversorgungsunternehmen nutzen in Europa den Bereich von 3...95 kHz.

Die Informationen wiederum werden in geeigneter Weise kodiert und in Form von modulierten Trägerfrequenzen als HF-Signale übertragen. Hier kommen bekannte Verfahren, wie Amplitudenumtastung (engl.: amplitude shift keying = ASK), Frequenzumtastung mit und ohne Bandspreizung (engl.: frequency shift keying = FSK) und Phasenumtastung (eng.: phase shift keying = PSK) zur Anwendung. Solche Netzbussysteme sind von verschiedenen Herstellern bekannt. In der Druckschrift „Busch-Powernet EIB" der Busch-Jaeger Elektro GmbH, Lüdenscheid, Druckschrift Nr. BJE 0001-01-07504/4.96 ist beispielsweise ein derartiges System beschrieben.

Die Schnittstelle zwischen einer "Anwendung" (Sensor oder Aktor) und dem "Bus" (230V-Stromversorgungsleitung) wird in Netzbussystemen durch sogenannte Buskoppelbausteine (engl.: bus coupling unit = BCU) hergestellt. Diese Buskoppelbausteine erfüllen die Sende- und Empfangsfunktionen des Netzübertragungssystems. Dabei muß den Besonderheiten Rechnung getragen werden, die durch die 230V-Stromversorgungsleitung als Bus gegeben sind. Dazu gehören in erster Linie die Notwendigkeit der galvanischen Trennung zwischen Bus und Applikation, zweitens das Problem der variierenden Impedanz des jeweiligen Punktes im Versorgungsnetz, an dem der Buskoppelbaustein angeschlossen ist, drittens die damit verbundenen Unterschiede im auf das Netz aufgeprägten Sendepegel und der damit verbundenen Sendereichweite und viertens der Signalempfang unter Präsenz verschiedener Netzstörungen im Sendefrequenzband, wie z. B. Surge- und Burst-Impulse sowie verschiedene Formen des Rauschens.

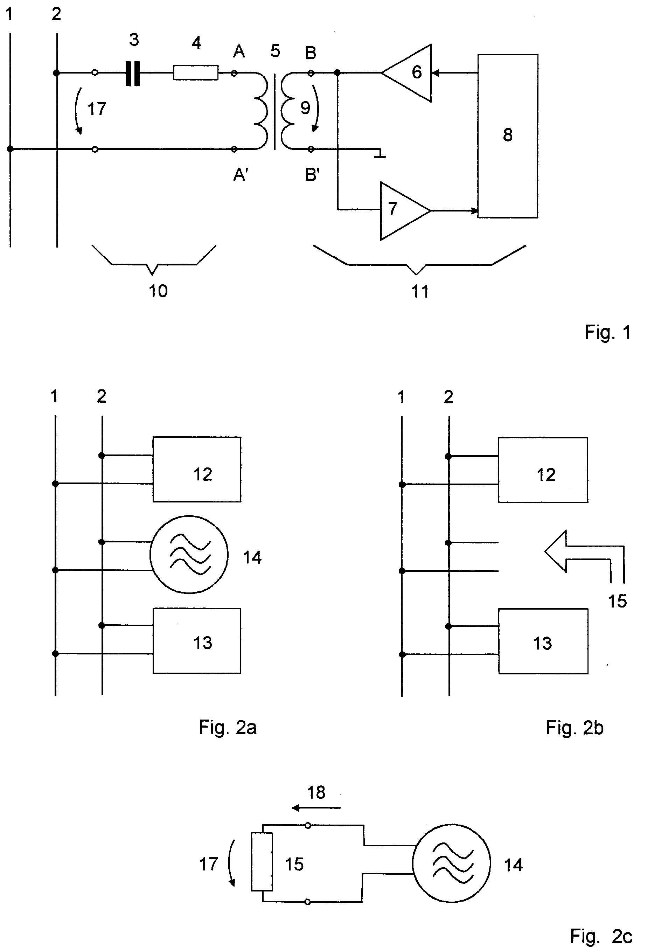

Eine typische Schaltungsanordnung einer Buskoppeleinheit gemäß dem Stand der Technik ist in Fig. 1 dargestellt.

In Fig. 1 ist der Nulleiter einer 230V/50Hz-Stromversorgungsleitung mit 1 bezeichnet, der zugehörige Phasenleiter mit 2. Zur galvanischen Trennung ist ein HF-Übertrager 5 mit primären Anschlußpunkten A, A' und sekundären Anschlußpunkten B, B' angeordnet.

Der HF-Übertrager 5 im Eingangskreis fungiert bidirektional für den Abgriff von Empfangsinformationen und für die Netzaufprägung von Sendeinformation. Insbesondere muß der Übertrager 5 für die verwendeten Trägerfrequenzen optimiert werden, was einen direkten Betrieb am 230V-Netz aus Impedanz- und Verlustleistungsgründen ausschließt.

Um die 230V bei 50Hz vom HF-Übertrager 5 zu isolieren, ist deshalb zwischen den Anschluß A der netzseitigen Wicklung des Übertragers 5 und die Phase 2 des Stromnetzes ein Entkoppelkondensator 3 geschaltet, der für die relativ niedrige Versorgungsfrequenz von 50Hz einen hohen Betrag seiner Impedanz besitzt, während er für die viel höheren Sendefrequenzen im Bereich um 100kHz einen sehr geringen Widerstand aufweist, um das Sendesignal nicht auch zu dämpfen. Der zweite Anschluß der netzseitigen Übertragerwicklung ist direkt mit dem Nulleiter 1 des Netzes verbunden. Zusätzlich kann mit dem Kondensator 3 ein Sicherungswiderstand 4 in Reihe liegen, der z.B. in Europa normativ erforderlich ist, einen Widerstandswert von ca. < 0,1 Ohm besitzt und keine für die Übertragung relevante Bedeutung besitzt.

Der auf den Übertrager 5 bezogene netzseitige Teil des Buskoppeleinrichtung ist in Fig. 1 mit 10 bezeichnet, eine Elektronikseite bildender Teil ist mit 11 bezeichnet. Die Elektronikseite 11 enthält einen Sendeverstärker 6, einen Empfangsverstärker 7 und eine Steuerlogik 8.

Das zweite Problem, nämlich die unbekannte Netzimpedanz, ist zwar aus einigen wenigen veröffentlichten Untersuchungen bekannt, wurde aber bisher bei der Auslegung der Buskoppeleinrichtung nicht berücksichtigt. Wesentlich ist die Tatsache, daß die Reichweite von Netzbussignalen (o.g. Punkt 3) unter anderem davon abhängt, welcher Sendepegel bzw. welche Sendespannung 17 (Fig. 1) am Ort des Senders auf das Netz aufgeprägt werden kann. Da das Netz signaldämpfend wirkt, ist eine hohe Sendespannung die Voraussetzung für eine hohe Reichweite, also eine große überbrückbare Kabellänge. Die erreichbare Sendespannung ist aber davon abhängig, welche Netzimpedanz nach Betrag und Phase von der Buskoppeleinheit am Ort ihrer Netzanschaltung gesehen wird.

Diese resultierende Netzimpedanz entsteht aus der gemeinsamen Wirkung aller am Netz angeschlossenen Verbraucher, inklusive der von den Netzkabeln selbst dargestellten Impedanz am Ort der Anschaltung der Buskoppeleinheit (BCU). Dies wird anhand der Fig. 2a, 2b und 2c verdeutlicht, worin angeschlossene Verbraucher, z.B. eine Beleuchtung mit 12, und ein Fernsehgerät mit 13 bezeichnet sind. Für die elektrischen Verhältnisse, die sich am Einkoppelort der Buskoppeleinheit 14 ergeben, kann deshalb das Netz in Form einer resultierenden Netzimpedanz 15 dargestellt werden (Figur 2b und 2c). Diese Impedanz 15 ändert sich in Betrag und Phase sowohl über die Zeit durch Ab- und Zuschalten von Verbrauchern, als auch über den Ort, d.h. z.B. an unterschiedlichen Steckdosen, infolge der geänderten Zusammensetzung der resultierenden Impedanz durch unterschiedlichen Einfluß näher und entfernter liegender Verbraucher sowie die unterschiedliche Position der Anschlußstelle in der gesamten Verdrahtungstopologie der konkreten Installation.

Möglich sind deshalb der Phase nach induktive (Phasenwinkel = 0°..90°) und kapazitive (Phasenwinkel = -90°..0°) Netze mit Impedanzen, die sich betragsmäßig vorwiegend im Wertebereich von 0..50 Ohm befinden.

Diese unterschiedliche Netzimpedanz bestimmt nach Figur 2c und Figur 1 wesentlich die vom Sendeverstärker über den HF-Übertrager und den Entkoppelkondensator auf das Netz, d.h. die resultierende Netzimpedanz aufgeprägte Sendespannung 17 der HF-Signale.

Gründe sind die endliche Sendeleistung des Sendeverstärkers 6 und der bei konstanter Sendespannung 9 am Verstärkerausgang (Figur 1) unterschiedliche netzimpedanzabhängige Sendestrom 18 durch die Netzimpedanz.

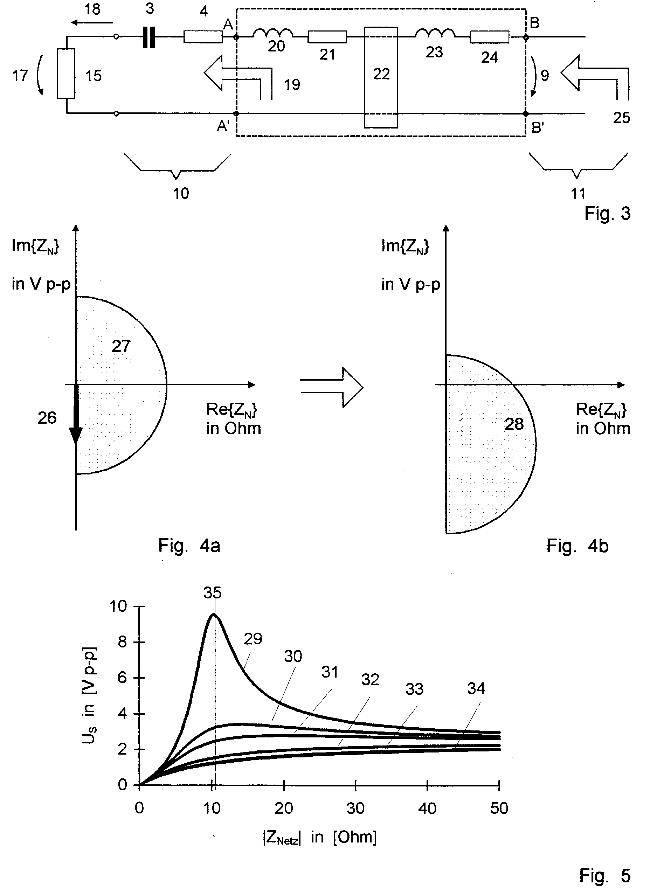

Eine weitere Erläuterung der Impedanzverhältnisse erfolgt nachstehend anhand der Fig. 3, in der der Übertrager 5 durch ein Ersatzschaltbild nachgebildet ist.

Der Übertrager 5 arbeitet in erster Linie als Impedanzkonverter, der die netzseitige Gesamtimpedanz mit dem Quadrat seines Übersetzungsverhältnisses auf die Elektronikseite 11 transformiert. Deswegen kann er als mathematischer Multiplikator 22 für die netzseitige Gesamtimpedanz angesehen werden. Zusätzlich zu den real im Einkoppelkreis vorhandenen Bauelementen sind noch die Streuinduktivitäten 20, 23 und die ohmschen Wicklungswiderstände 21, 24 zu betrachten. Beide und auch der eventuelle Sicherungswiderstand 4 können für die Erklärung der Arbeitsweise vorübergehend vernachlässigt werden.

Bei Anordnungen gemäß dem Stand der Technik (Figur 1) ist die Sendespannung 17 wie folgt von der Netzimpedanz abhängig. Der Entkoppelkondensator 3 besitzt einen Betrag, der durch $X_C = 1/\omega C_K$ gegeben ist, wobei $X_C$ der Betrag der Impedanz des Kondensators ist, $C_K$ ist die Kapazität des Entkoppelkondensators und $\omega = 2\pi f$ die Kreisfrequenz des HF-Sendesignals mit $f$ als Sendefrequenz (z.B. 100KHz). Die Phase der Impedanz des Entkoppelkondensators beträgt $\varphi_C = -90°$. Damit kann diese Impedanz 26 des Entkopplungskondensators als Punkt oder Vektor in der komplexen Ebene mit Real- und Imaginärteil dargestellt werden, wie Figur 4a zeigt. Die Netzimpedanz 15 aus Figur 2c kann ebenfalls durch Betrag und Phase mit dem o.g. Bereich $X_N = 0\Omega..ca.50\Omega$ und $\varphi_N = -90°..+90°$ dargestellt werden. Größere Beträge sind möglich, aber selten und sind kein Widerspruch zu der hier abgeleiteten Arbeitsweise. In der komplexen Ebene lassen sich demnach alle möglichen Netzimpedanzen 15 durch Punkte oder Vektoren innerhalb eines Halbkreises 27 (exakter: innerhalb der rechten Halbebene) darstellen (Figur 4a). Für den Sendestrom 18 ist nun die Summe der resultierenden Impedanz 19 bzw. 25 zwischen den Punkten A und A' bzw. B und B' in Figur 1 bzw. 3 entscheidend. Unter den o.g. vorübergehenden Vernachlässigungen ist also die Summe 28 der Netzimpedanz und der Impedanz des Entkoppelkondensators wichtig, die sich durch vektorielle Addition der Impedanzen nach Fig. 4b ergibt und einen um $X_C$ 26 verschobenen Halbkreis 28 ergibt. Jeder Punkt auf dem oder innerhalb des verschobenen Halbkreises repräsentiert eine mögliche resultierende Impedanz an den Punkten A und A' in den Figuren 1 und 3 Da die Ausgangsspannung 9 am Sendeverstärker (Figur 1) eine feste Größe ist, ist der Betrag des Sendestroms umgekehrt proportional zum Betrag der resultierenden Impedanz im Eingangskreis. Damit bedingen in Figur 4b solche Punkte einen hohen Sendestrom, die einen kleinen Betrag haben, also nahe dem Nullpunkt der komplexen Ebene liegen. Dieser hohe Strom erzeugt über der resultierenden Netzimpedanz 15 aus Figur 2c auch eine hohe Sendespannung $U_S$ bzw. 17.

Diese Sendespannung ist also genau dann maximal, wenn die Netzimpedanz denselben Betrag aufweist, wie die Impedanz des Entkoppelkondensators, d.h. $X_C = X_N$, und genau diegleiche Phase aber mit entgegengesetztem Vorzeichen aufweist. Dann bilden das Netz und der Entkoppelkondensator eine Serienresonanz, der resultierende Vektor ist bis auf die ohmschen Verluste identisch Null und die Sendespannung wird maximal. Bei allen anderen Phasen- und Betragslagen des Netzes ergibt sich eine geringere Sendespannung.

Figur 5 zeigt die prinzipiellen, von der Netzphase abhängigen Sendespannungen $U_S$ als Funktion des Betrages der Netzimpedanz $Z_{Netz}$. Insbesondere wird die resultierende Impedanz an den Punkten A,A' bzw. B,B' größer als die eigentliche Netzimpedanz, wenn das Netz ohmsch oder kapazitiv ist, da sich dann die Impedanzzeiger in der komplexen Ebene gleichsinnig addieren. Damit ist die resultierende Sendespannung sogar kleiner, als sie bei direkter Belastung des Sendeverstärkers mit der reinen Netzimpedanz wäre.

Fig. 5 zeigt einen beispielhaften Verlauf 29 der Sendespannung auf dem Netz als Funktion des Betrages der Netzimpedanz bei einem Phasenwinkel von +90°, einen Verlauf 30 bei einem Phasenwinkel von +60°, einen Verlauf 31 bei +45°, einen Verlauf 32 bei 0°, einen Verlauf 33 bei -45° und einen Verlauf 34 bei -90°. Mit 35 ist eine Resonanzstelle auf Grund zufälliger Kompensation der Impedanz des Entkoppelkondensators durch ein induktives Netz bezeichnet.

Zusammenfassend bewirkt also bei Geräten gemäß dem Stand der Technik die Entkopplung der Netzspannung durch einen Kondensator trotz konstanter Spannung am Ausgang des Sendeverstärkers eine von der Phase und vom Betrag stark abhängige Sendespannung für das oder die HF-Signale auf dem Netzknoten. Da die Netzimpedanz nicht bekannt ist, führt diese Technik zu einer nicht reproduzierbaren Reichweite von Sendesignalen, die bis zum Verbindungsverlust gehen kann. Auf der anderen Seite werden im Falle der zufälligen Kompensation des Entkoppelkondensators durch eine phaseninverse induktive Netzimpedanz partiell so hohe Sendepegel erreicht, daß einerseits hohe Reichweiten erzielt werden, aber andererseits die damit verbundene Sendestromspitze das interne Netzteil der Buskoppelbausteine überlastet und damit die Betriebsspannung der Geräte zusammenbricht, was zum Übertragungsabbruch führt.

Die bekannte Technik führt damit zu unterschiedlichen Reichweiten in kapazitiven und induktiven Netzten, abhängig von der Netzphasenlage und dem Netzimpedanzbetrag.

Der eingangs genannte vierte Punkt bezieht sich auf den Signalempfang unter Präsenz von netzgebundenen Störungen. Der eigentliche Empfangsverstärker und die Art der Signalauswertung sind abhängig von der verwendeten Modulationstechnik, die nicht Gegenstand der Erfindung ist. Allerdings entscheidet auch die Einkoppelschaltung über die Wirkungen von Außerbandstörungen. In dieser Hinsicht trägt der Entkoppelkondensator nicht zur zusätzlichen Unterdrückung von hochfrequenten Störungen bei, da sein Impedanz-Betrag mit steigender Frequenz immer geringer wird.

Der Erfindung liegt die Aufgabe zugrunde, eine Buskoppeleinrichtung anzugeben, bei der die auf das Netz aufgeprägte Sendespannung unabhängig von der Phasenlage der Netzimpedanz und soweit wie möglich auch unabhängig von dem Betrag der Netzimpedanz, d.h. konstant ist.

Gleichzeitig sollen die galvanische Isolation und die Empfangsempfindlichkeit der Buskoppeleinrichtung und der daran angeschlossenen Geräte unbeeinflußt bleiben. Wenn möglich soll sogar eine verbesserte Unterdrückung von Störsignalen außerhalb des Nutzfrequenzbandes der HF-Signale erreicht werden. Damit würde eine Technik existieren, mit der die Übertragungseigenschaften des netzgebundenen Installationsbussystems unabhängig von der sich zeitlich und örtlich ändernden Netzimpedanz konstant und auf vorherbestimmbarem Qualitätsniveau gehalten werden könnten. Das System würde in stark induktiven Netzen genauso sicher arbeiten und ähnliche Reichweiten erzielen, wie in schwach induktiven oder gar kapazitiven Netzen.

Diese Aufgabe wird durch eine Buskoppeleinrichtung mit den im Anspruch 1 angegebenen Merkmalen gelöst. Vorteilhafte Ausgestaltungen sind in weiteren Ansprüchen angegeben.

Es wird vorgeschlagen, im Einkoppelkreis eines Buskoppelbausteines eine zusätzliche Induktivität in Serie zum Entkoppelkondensator zu schalten, die eine interne Vorkompensation der geräteeigenen Eingangsimpedanz bewirkt. Die Induktivität wird so berechnet, daß die Impedanz der Induktivität bei der Frequenz des HF-Trägersignals genau die Impedanz des Entkoppelkondensators kompensiert. Falls mehrere verschiedene Trägerfrequenzen zum Einsatz kommen, erfolgt die Dimensionierung wie weiter unten angegeben. Damit ist im Eingangskreis durch den für die HF-Senderfrequenz bewußt erzeugten Serienresonanzkreis nur noch der ohmsche Wicklungswiderstand der "Kompensationsinduktivität" wirksam, der im Milliohmbereich liegt und für die Funktion vernachlässigbar ist.

Eine weitere Erläuterung der Erfindung und ihrer Vorteile erfolgt anhand der Zeichnungsfiguren.

Es zeigen:

Fig. 1          eine Buskoppeleinheit gemäß dem Stand der Technik,

Fig. 2a, 2b, 2c  Darstellungen zur Erläuterung der Entstehung einer resultierenden Netzimpedanz am Ort der Anschaltung einer Buskoppeleinheit,

Fig. 3          ein Ersatzschaltbild zur Anordnung gemäß Fig. 1,

Fig. 4a, 4b      vektorielle Darstellungen von Impedanzen,

Fig. 5          Verläufe von Sendespannungen, bezogen auf den Stand der Technik,

Fig. 6          eine erfindungsgemäße Buskoppeleinrichtung,

Fig. 7          ein Ersatzschaltbild zur Anordnung gemäß Fig. 6,

Fig. 8a, 8b      vektorielle Darstellungen von Impedanzen,

Fig. 9          eine Darstellung der Abhängigkeit der Sendespannung von der Netzimpedanz, bezogen auf die erfindungsgemäße Buskoppeleinheit mit Vorkompensation, und

Fig. 10         eine Erweiterung der in Fig. 6 gezeigten Buskoppeleinrichtung durch eine sekundärseitige Vorkompensation.

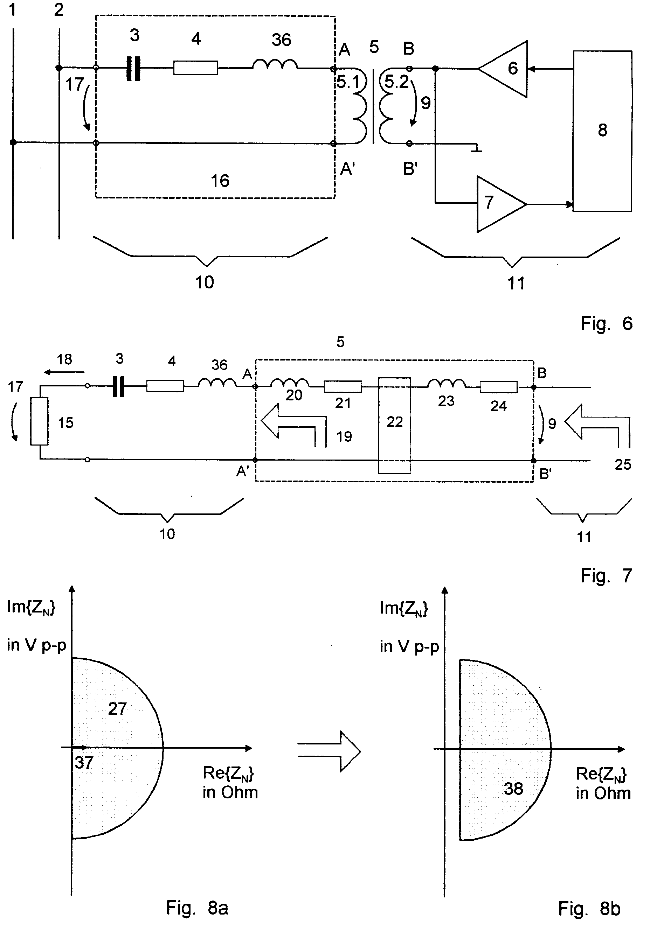

Fig. 6 zeigt eine erfindungsgemäße Buskoppeleinrichtung, die sich von der bekannten, in Fig. 1 dargestellten Buskoppeleinheit durch eine geänderte Ausführung des Einkoppelkreises unterscheidet, der in Fig. 6 mit 16 bezeichnet ist. Der Einkoppelkreis 16 enthält eine Kompensationsinduktivität 36, die in Serie zum Sicherungswiderstand 4 und dem Entkopplungskondensator 3 geschaltet ist. Mit 5.1, 5.2 sind die Primär- bzw. Sekundärwicklung des Übertragers 5 bezeichnet.

Die Dimensionierung der Kompensationsinduktivität 36 erfolgt durch Gleichsetzung des kapazitiven Widerstandes und der induktiven Widerstände im Ersatzschaltbild, das Fig. 7 zeigt und dessen Bezugszeichen die gleiche Bedeutung haben wie bei Fig. 3. Falls die Streuinduktivitäten vernachlässigbar sind, gilt $X_C = X_L = 1/\omega C_K = \omega L_{Komp}$ mit $L_{Komp}$ als Kompensationsinduktivität. Bei nicht vernachlässigbaren Streuinduktivitäten müssen diese als induktive Anteile mit kompensiert werden. Auf diese Weise ist der komplexe Widerstand des Einkoppelkreises 16 bei der HF-Sendefrequenz (z.B. 100KHz) annähernd Null, während der Widerstand der Kompensationsinduktivität bei 50 Hz wegen der viel kleineren Frequenz vernachlässigbar ist, so daß die Entkopplung der 230V unbeeinflußt bleibt. Die galvanische Trennung ist durch Beibehaltung des Übertragers 5 ebenfalls gegeben.

Für die resultierende Impedanz 19 des Einkoppelkreises 16 unter Berücksichtigung der Netzimpedanz 15 aus Figur 2c ergibt sich ein erheblicher Vorteil. An den Punkten A,A' (Fig. 6 und 7) wirkt bei der Sendefrequenz nur noch die reine Netzimpedanz, da sich bei dieser Frequenz die komplexen Anteile des Entkoppelkondensators 3 und der Kompensationsinduktivität 36 aufheben. Unter Berücksichtigung der geringen ohmschen Restwiderstände (ohmsche Anteile der Kompensationsinduktivität 36 und der Übertragerwicklungen 5.1, 5.2 sowie eventuell des Sicherungswiderstandes 4) ergibt sich die Impedanz an den Punkten A,A' nach den Figuren 8a und 8b. Der Halbkreis, der die möglichen Netzimpedanzen beschreibt, verschiebt sich geringfügig auf der reellen Achse. Damit wird die Netzimpedanz unbeeinflußt am HF-Übertrager, und transformiert auch am Sendeverstärker (Punkte B,B'), wirksam.

Damit hängt bei konstanter HF-Ausgangsspannung 9 am Sendeverstärker 6 (Fig. 6) der Sendestrom 18 direkt vom Betrag der Netzimpedanz ab und nicht von geräteinternen frequenzabhängigen Bauelementen. Insbesondere spielt es keine Rolle, ob das Netz kapazitiv oder induktiv ist, denn die resultierende Zeigerlänge in Figur 8b ist für alle Netzphasenlagen mit jeweils gleichem Betrag bis auf den vernachlässigbaren Einfluß der ohmschen Restwiderstände gleich lang. Damit ist auch die auf das Netz aufgeprägte Sendespannung 17 unabhängig von der Phasenlage der Netzimpedanz 15, womit eine wesentliche Forderung der Aufgabenstellung erfüllt ist.

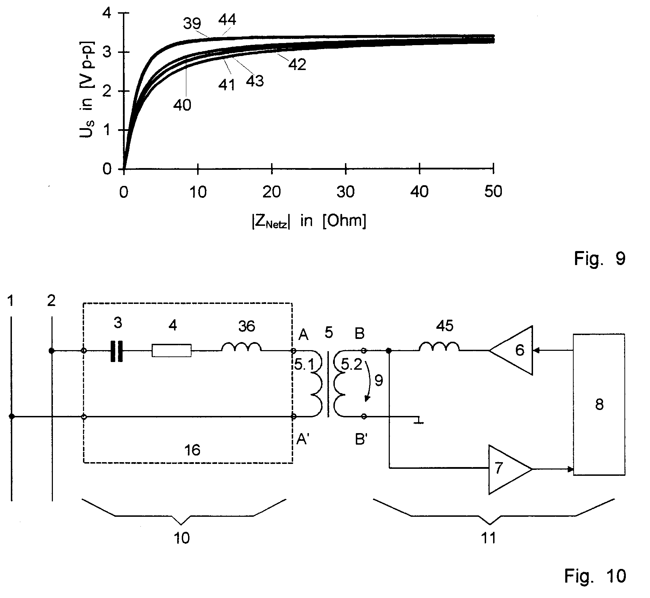

Eine zweite Überlegung betrifft die Abhängigkeit der Sendespannung 17 vom Betrag der Netzimpedanz. Bei der vorgeschlagenen Lösung ist der Spannungsabfall 17 über der resultierenden Netzimpedanz 15 (bis auf ohmsche Verluste und Übertragernichtidealitäten) der einzige im Einkoppelkreis (die Spannungsabfälle über dem Entkoppelkondensator und der Kompensationsinduktivität kompensieren sich). Dieser Sendepegel 17 ist gleich der vom HF-Übertrager transformierten Sendespannung 9 am Verstärkerausgang. Diese wiederum ist annähernd konstant, wenn der Innenwiderstand des HF-Senders 6 kleiner als die vom HF-Übertrager transformierte Netzimpedanz ist. Diese Bedingung wird erst bei Netzimpedanzen in der Größenordnung von kleiner einiger Ohm verlassen. Damit ist die Sendespannung 17 ab einer bestimmten Betragsgröße der Netzimpedanz 15 sogar konstant. Die Phasen- und die partielle Betragsunabhängigkeit der Sendespannung 17 von der Netzimpedanz 15 ist qualitativ in Fig. 9 dargestellt und wird durch den Vergleich mit den Sendespannungsabhängigkeiten beim Stand der Technik in Figur 5 deutlich.

Bezüglich des Empfangsverhaltens und der Eingangsimpedanz der Buskoppeleinrichtung verhält sich die vorgeschlagene Lösung wie bekannte Einrichtungen, da die Vorkompensation die Eingangsimpedanz nur um einige Ohm ändert, während der Übertrager den hochohmigen Eingang der Empfangsstufe 7 (einige Kilo-Ohm) in den Eingangskreis transformiert und dieser Wert immer noch einige 100 Ohm beträgt. Damit wirkt sich die Vorkompensation praktisch nicht auf das Empfangsverhalten aus.

Andererseits ist die vorgestellte Lösung vorteilhaft hinsichtlich der Unterdrückung hochfrequenter Netzstörungen. Der Serienschwingkreis aus Entkoppelkondensator 3 und Kompensationsinduktivität 36 besitzt bei der HF-Sendefrequenz den geringsten Widerstand. Für höhere Frequenzen beginnt die Impedanz zu steigen, da sie zunehmend von dem frequenzlinearen Betrag der Induktivität bestimmt wird. Für kleinere Frequenzen wird der Serienschwingkreis kapazitiv, so daß der zu kleinen Frequenzen steigende Betrag der Kondensatorimpedanz dominant wird. Auf diese Weise werden Außerbandstörungen wirksam vorgedämpft, so daß die Sicherheit der eigentlichen Signalerkennung im Empfangsteil der Elektronik erhöht wird.

Die bisher genannte Dimensionierung der Kompensationsinduktivität ist exakt für Systeme, die nur mit einer HF-Sendefrequenz arbeiten. Dazu zählen Systeme, die auf der Basis der Amplitudenmodulation (ASK) arbeiten und Systeme, die die Phasenmodulation (PSK) verwenden. Bei ersteren steckt die Information in der Amplitudenänderung, bei letzteren in der Phasenänderung desselben HF-Trägersignals.

Bei Systemen auf der Basis der Frequenzmodulation (FSK) wird die Information in Form von Frequenzänderungen übermittelt, d.h. es gibt mehr als nur eine HF-Trägerfrequenz. In diesem Fall kann die Impedanzkompensation natürlich nur für eine Frequenz erfolgen. Praktisch wird der Frequenzabstand durch die Übertragungsrate definiert und liegt im Bereich einiger Kilohertz. Dieser Abstand ist im Sinne der Impedanzkompensation dicht genug, um die Kompensationsinduktivität auf die mittlere Sendefrequenz abzustimmen, ohne dabei zu große Restimpedanzen des Kompensationsschwingkreises bei den Sendefrequenzen zu erhalten. Diese Restimpedanzen bewegen sich z.B. bei einem Frequenzabstand der Sendefrequenzen von 10KHz und einer Mittenfrequenz von 110 KHz im Bereich von kleiner 1 Ohm.

Eine weitere erfindungsgemäße Ausbildung könnte darin liegen, die Vorkompensation auch zusätzlich auf der Elektronikseite der Einkoppelschaltung, also auf der Sekundärseite des Übertragers 5 vorzusehen, wie in Fig. 10 dargestellt ist. In der Schaltungsanordnung gemäß Fig. 10 ist der Ausgang des Sendeverstärkers 6 unter Zwischenschaltung einer sekundärseitigen Induktivität 45 mit der Sekundärwicklung 5.2 des Übertragers 5 verbunden. Dies wird z.B. interessant, wenn der Ausgang des Sendeverstärkers 6 gegenüber der Schaltungsmasse nicht gleichspannungsfrei ist. In diesen Fällen wird das HF-Signal über einen Auskoppelkondensator (in Fig. 10 nicht sichtbar, da Teil des Verstärkers 6) gleichspannungsfrei gemacht. Dieser Auskoppelkondensator wirkt natürlich ebenfalls verzerrend bezüglich der für den Verstärkerausgang wirksamen Gesamtimpedanz des Einkoppelkreises im Sinne der Erläuterungen zum Stand der Technik. Eine Kompensation dieses Kondensators durch Maßnahmen auf der Netzseite oder umgekehrt ist dabei nicht möglich, da die Vorkompensation durch eine induktive Reihenschaltung erfolgen muß, während der Kondensator durch den Übertrager in eine zu den Punkten A,A' parallele Kapazität transformiert wird.

Zusammenfassend ist also festzustellen, daß durch die interne Impedanzvorkompensation aller komplexen Widerstände im Einkoppelkreis von Buskoppelbausteinen für die netzgebundene Übertragungstechnik die auf das Netz aufmodulierte Sendespannung für die HF-Trägersignale zum einen unabhängig von der Phasenlage der Netzimpedanz und zum anderen zumindest bei höheren Netzimpedanzen auch unabhängig vom Betrag der Netzimpedanz wird. Die Sendespannung kann durch eine Anpassung des Sendeverstärkers adaptiert werden. Damit ist eine hohe Wahrscheinlichkeit für eine homogene Reichweite des netzgebundenen Übertragungssystems in induktiven und kapazitiven Netzen gegeben.

Weiterhin ist eine höhere Systemstabilität zu erwarten, da bezüglich der Überlastung des Netzteils durch einen zu hohen Sendestrom nur noch solche Netzimpedanzen kritisch sind, die betragsmäßig nahe 0 Ohm liegen. Dieser Fall ist jedoch wesentlich unwahrscheinlicher als der Fall, daß Netzimpedanzen in der Größenordnung der Impedanz des Entkoppelkondensators liegen (z.B. 10 Ohm bei 110 kHz und 0,15 μF

Kapazität), verbunden mit induktiver Phasenlage. In jedem Fall kann eine Strombegrenzung im Sendeverstärker die Stabilität sichern. Darüber hinaus wirkt sich der mit der Vorkompensation entstehende Serienschwingkreis positiv auf die Dämpfung von Außerbandstörungen aus.

Bezugszeichenliste

| 1 | Nulleiter der 230V/50Hz Stromversorgungsleitung |
|---|---|
| 2 | Phase der 230V/50Hz Stromversorgungsleitung |
| 3 | Entkoppelkondensator |
| 4 | Sicherungswiderstand |
| 5 | HF-Übertrager |
| 5.1 | Primärwicklung |
| 5.2 | Sekundärwicklung |
| 6 | Sendeverstärker |
| 7 | Empfangsverstärker |
| 8 | Steuerlogik |
| 9 | Sendespannung am Ausgang des Sendeverstärkers |
| 10 | Netzseite des Buskoppelbausteines bezogen auf den HF-Übertrager als galvanische Trennung |
| 11 | Elektronikseite des Buskoppelbausteines bezogen auf den HF-Übertrager als galvanische Trennung |
| 12 | Verbraucher, z.B. Beleuchtung |
| 13 | Verbraucher, z.B. Fernseher |
| 14 | Buskoppelbaustein |
| 15 | resultierende Netzimpedanz am Ort der Netzankopplung eines Buskoppelbausteines |
| 16 | Einkoppelkreis |
| 17 | Sendespannung über der resultierenden Netzimpedanz |
| 18 | Sendestrom |
| 19 | resultierende Eingangsimpedanz für den HF-Übertrager auf der Netzseite |
| 20 | netzseitige Streuinduktivität des HF-Übertragers |
| 21 | netzseitiger ohmscher Wicklungswiderstand des HF-Übertragers |
| 22 | idealer HF-Übertrager als Multiplikator mit dem Quadrat des Übersetzungsverhältnisses des HF-Übertragers |
| 23 | elektronikseitige Streuinduktivität des HF-Übertragers |
| 24 | elektronikseitiger ohmscher Wicklungswiderstand des HF-Übertragers |
| 25 | resultierende Impedanz für den Ausgang des Sendeverstärkers, ist identisch mit der Last, die der Sendeverstärker sieht |
| 26 | Impedanz des Entkoppelkondensators in der komplexen Ebene |

27 Bereich möglicher Netzimpedanzen in der komplexen Ebene

28 Bereich möglicher resultierender Eingangsimpedanzen in der komplexen Ebene an den Punkten A und A'

29 beispielhafter Verlauf der Sendespannung auf dem Netz als Funktion des Betrages der Netzimpedanz bei einem Phasenwinkel von +90°

30 beispielhafter Verlauf der Sendespannung auf dem Netz als Funktion des Betrages der Netzimpedanz bei einem Phasenwinkel von +60°

31 beispielhafter Verlauf der Sendespannung auf dem Netz als Funktion des Betrages der Netzimpedanz bei einem Phasenwinkel von +45°

32 beispielhafter Verlauf der Sendespannung auf dem Netz als Funktion des Betrages der Netzimpedanz bei einem Phasenwinkel von 0°

33 beispielhafter Verlauf der Sendespannung auf dem Netz als Funktion des Betrages der Netzimpedanz bei einem Phasenwinkel von -45°

34 beispielhafter Verlauf der Sendespannung auf dem Netz als Funktion des Betrages der Netzimpedanz bei einem Phasenwinkel von -90°

35 Resonanzstelle auf Grund zufälliger Kompensation der Impedanz des Entkoppelkondensators durch ein induktives Netz

36 netzseitige Induktivität zur Vorkompensation des Entkoppelkondensators

37 Impedanz aller ohmschen Widerstände in der komplexen Ebene im netzseitigen Einkoppelkreis eines Buskoppelbausteines mit Vorkompensation

38 Bereich möglicher resultierender Eingangsimpedanzen in der komplexen Ebene an den Punkten A und A' bei Buskoppelbausteinen mit Vorkompensation

39 beispielhafter Verlauf der Sendespannung auf dem Netz als Funktion des Betrages der Netzimpedanz bei einem Phasenwinkel von +90°

40 beispielhafter Verlauf der Sendespannung auf dem Netz als Funktion des Betrages der Netzimpedanz bei einem Phasenwinkel von +60°

41 beispielhafter Verlauf der Sendespannung auf dem Netz als Funktion des Betrages der Netzimpedanz bei einem Phasenwinkel von +45°

42 beispielhafter Verlauf der Sendespannung auf dem Netz als Funktion des Betrages der Netzimpedanz bei einem Phasenwinkel von 0°

43 beispielhafter Verlauf der Sendespannung auf dem Netz als Funktion des Betrages der Netzimpedanz bei einem Phasenwinkel von -45°

44 beispielhafter Verlauf der Sendespannung auf dem Netz als Funktion des Betrages der Netzimpedanz bei einem Phasenwinkel von -90°

45 elektronikseitige Induktivität zur Vorkompensation eventueller Auskoppelkondensatoren am Ausgang des Sendeverstärkers

## Patentansprüche

1. Buskoppeleinrichtung für ein Installationsbussystem mit Stromversorgungsnetz-gebundener Informationsübertragung unter Verwendung wenigstens eines HF-Trägersignals, wobei

a) ein Einkoppelkreis (16) mit einem HF-Übertrager (5) vorhanden ist, zu dessen Primärwicklung (5.1) zumindest ein Entkopplungskondensator (3) und eine Kompensationsinduktivität (36) in Serie geschaltet sind, und diese Serienschaltung (3,36,5.1) mit einem Niederspannungsnetz (1,2) verbindbar ist, und

b) die Induktivität (36) so ausgelegt ist, daß ihre Impedanz bei der Frequenz eines einzigen verwendeten HF-Trägersignals, oder eines Mittelwerts der Frequenzen der HF-Trägersignale im Fall der Verwendung mehrerer HF-Trägersignale, die Impedanz des Entkopplungskondensators (3) durch eine Serienresonanz kompensiert.

2. Buskoppeleinrichtung nach Anspruch 1, dadurch gekennzeichnet, daß die Induktivität (36) unter Berücksichtigung von Streuinduktivitäten des HF-Übertragers (5) ausgelegt ist.

3. Buskoppeleinrichtung nach Anspruch 1 oder 2, dadurch gekennzeichnet, daß in die Serienschaltung von Entkopplungskondensator (3), Induktivität (36) und Primärwicklung (5.1) ein Sicherungswiderstand (4) eingefügt ist.

4. Buskoppeleinrichtung nach einem der vorstehenden Ansprüche, dadurch gekennzeichnet, daß für den Fall, daß auf der Sekundärseite des Übertragers (5) ein Sendeverstärker (6) angeschlossen ist, der einen Auskoppelkondensator enthält, oder der über einen solchen gleichspannungsfrei angeschlossen ist, zusätzlich eine sekundärseitige Kompensation mittels einer sekundärseitigen Induktivität (45) durchgeführt ist, wobei diese sekundärseitige Induktivität (45) in Reihe mit der Sekundärwicklung (5.2) des Übertragers (5) geschaltet ist, und die Impedanz des Auskoppelkondensators bei der Frequenz des HF-Trägersignals oder des Mittelwerts von HF-Trägersignal-Frequenzen kompensiert.

Fig. 1

Fig. 2a

Fig. 2b

Fig. 2c

Fig. 3

Fig. 4a

Fig. 4b

Fig. 5

Fig. 6

Fig. 7

Fig. 8a

Fig. 8b

Fig. 9

Fig. 10